# EUROPEAN PATENT APPLICATION

(11) **EP 4 579 654 A1**
(43) Date of publication of application: **02.07.2025**
(21) Application number: 24195403.1
(22) Date of filing: 20.08.2024
(51) Int. Cl.: G10L 15/22

(54) **DISPLAY DEVICE AND OPERATING METHOD THEREOF**

(30) Priority: 26.12.2023 KR 20230191836
(71) Applicant: LG Electronics Inc., Seoul 07336 (KR)
(72) Inventor: KIM, Hyunseung, 06772 Seoul (KR)
(74) Representative: Vossius & Partner Patentanwälte Rechtsanwälte mbB

(57) **Abstract**

A display device according to an embodiment of the present disclosure may include a display; a network interface configured to communicate with a Natural Language Processing (NLP) server; and a controller configured to obtain first voice data uttered by a first speaker, receive a first response result linking with account information of the first speaker from the NLP server based on the fact that the first voice data includes a first type of starting word, and display the first response result on the display.

## Description

### BACKGROUND

The present disclosure relates to a display device, and more specifically to a display device capable of speaker recognition.

Speaker recognition service refers to a service that identifies and distinguishes specific speakers using voice recognition technology. The speaker recognition service may be used in a variety of application areas and may be utilized in security, education, voice command, and automation systems.

The speaker recognition service analyzes the characteristics of the voice uttered by the speaker, stores each speaker's unique voice pattern, and can identify the speaker based on the stored voice pattern.

In the current implementation of the speaker recognition function, there are different needs depending on the surrounding situation as to whether or not to display the speaker's personal information.

There is a disclosure that recognizes multiple starting words in existing technology, but this is to use a completely different voice engine depending on the type of starting word, and it does not determine whether or not to recognize the speaker.

### SUMMARY

An object of the present disclosure is to determine whether to recognize a speaker based on whether a preset starting word is recognized and to provide search results accordingly.

An object of the present disclosure is to filter or add search results using a speaker recognition function when providing search results.

A display device according to an embodiment of the present disclosure may include a display; a network interface configured to communicate with a Natural Language Processing (NLP) server; and a controller configured to obtain first voice data uttered by a first speaker, receive a first response result linking with account information of the first speaker from the NLP server based on the fact that the first voice data includes a first type of starting word, and display the first response result on the display.

According to an embodiment of the present disclosure, personalized search results linked to the speaker's account information may be provided according to the utterance of the speaker recognition starting word. Accordingly, the user experience may be greatly improved.

### BRIEF DESCRIPTION OF THE DRAWINGS

FIG. 1 is a block diagram illustrating a configuration of a display device according to an embodiment of the present disclosure.
FIG. 2 illustrates an artificial intelligence (AI) server according to an embodiment of the present disclosure.
FIG. 3 is a diagram for explaining the configuration of a voice recognition system according to an embodiment of the present disclosure.
FIG. 4 is a ladder diagram for explaining the operation method of the speaker recognition system according to an embodiment of the present disclosure.
FIGS. 5a to 5c are views for explaining examples of providing different search results according to the utterance of a speaker recognition starting word or a speaker recognition non-starting word according to an embodiment of the present disclosure.
FIGS. 6a and 6b are views for explaining examples of providing filtered search results when the first speaker utters a first voice command including a speaker recognition starting word and the second speaker utters a second voice command according to an embodiment of the present disclosure.

### DETAILED DESCRIPTION OF THE EMBODIMENTS

Hereinafter, embodiments relating to the present disclosure will be described in detail with reference to the drawings. The suffixes "module" and "unit" for components used in the description below are assigned or mixed in consideration of easiness in writing the specification and do not have distinctive meanings or roles by themselves.

A display device according to an embodiment of the present disclosure is, for example, an intelligent display device that adds a computer supporting function to a broadcast receiving function, and may have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS may be used.

Accordingly, since various applications are freely added or deleted on a general purpose OS kernel, a display device described herein, for example, may perform various user-friendly functions. The display device, in more detail, may be a network TV, Hybrid Broadcast Broadband TV (HBBTV), smart TV, light-emitting diode (LED) TV, organic light-emitting diode (OLED) TV, and so on and in some cases, may be applied to a smartphone.

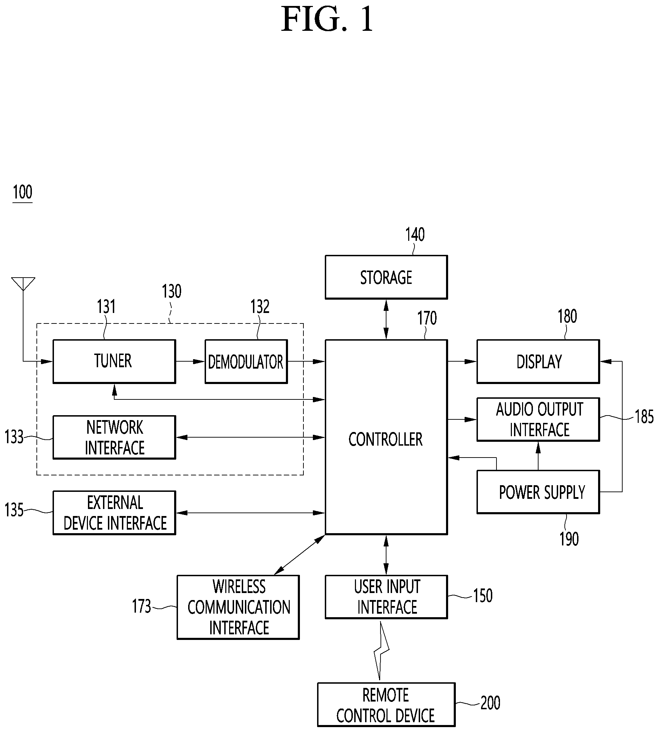

Fig. 1 is a block diagram illustrating a configuration of a display device according to an embodiment of the present disclosure.

Referring to Fig. 1, a display device 100 may include a broadcast receiver 130, an external device interface 135, a storage 140, a user interface 150, a controller 170, a wireless communication interface 173, a display 180, an audio output interface 185, and a power supply 190.

The broadcast receiver 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into video signals, audio signals, and broadcast program-related data signals, and may restore the divided video signals, audio signals, and data signals into the form capable of being output.

The external device interface 135 may receive an application or an application list in an adjacent external device, and may transmit the application or the application list to the controller 170 or the storage 140.

The external device interface 135 may provide a connection path between the display device 100 and the external device. The external device interface 135 may receive at least one an image or audio output from the external device that is wirelessly or wiredly connected to the display device 100, and may transmit the image and/or the audio to the controller 170. The external device interface 135 may include a plurality of external input terminals. The plurality of external input terminals may include an RGB terminal, at least one High Definition Multimedia Interface (HDMI) terminal, and a component terminal.

An image signal of the external device input through the external device interface 135 may be output through the display 180. A voice signal of the external device input through the external device interface 135 may be output through the audio output interface 185.

An external device connectable to the external device interface 135 may be one of a set-top box, a Blu-ray player, a DVD player, a game console, a sound bar, a smartphone, a PC, a USB memory, and a home theater system, but this is just exemplary.

The network interface 133 may provide an interface for connecting the display device 100 to a wired/wireless network including an Internet network. The network interface 133 may transmit or receive data to or from another user or another electronic device through an accessed network or another network linked to the accessed network.

In addition, some content data stored in the display device 100 may be transmitted to a user or an electronic device, which is selected from other users or other electronic devices preregistered in the display device 100.

The network interface 133 may access a predetermined webpage through an accessed network or another network linked to the accessed network. That is, the network interface 133 may transmit or receive data to or from a corresponding server by accessing a predetermined webpage through the network.

The network interface 133 may receive content or data provided from a content provider or a network operator. That is, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through the network.

The storage 140 may store signal-processed image, voice, or data signals stored by a program in order for each signal processing and control in the controller 170.

In addition, the storage 140 may perform a function for temporarily storing image, voice, or data signals output from the external device interface 135 or the network interface 133, and may store information on a predetermined image through a channel memory function.

The storage 140 may store an application or an application list input from the external device interface 135 or the network interface 133.

The display device 100 may play content files (e.g., video files, still image files, music files, document files, application files, etc.) stored in the storage 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from a remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not shown) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the audio output interface 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the audio output interface 185.

In addition, the controller 170 may output image signals or voice signals of an external device such as a camera or a camcorder, which are input through the external device interface 135, through the display 180 or the audio output interface 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the storage 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component or one component may be divided into two or more components and configured. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing contents input from the image processing device.

In this case, an operating method of a display device according to an embodiment of the present disclosure described below may be performed by one of the display device described with reference to Fig. 1, an image processing device such as the separated set-top box, and a content playback device including the display 180 and the audio output interface 185.

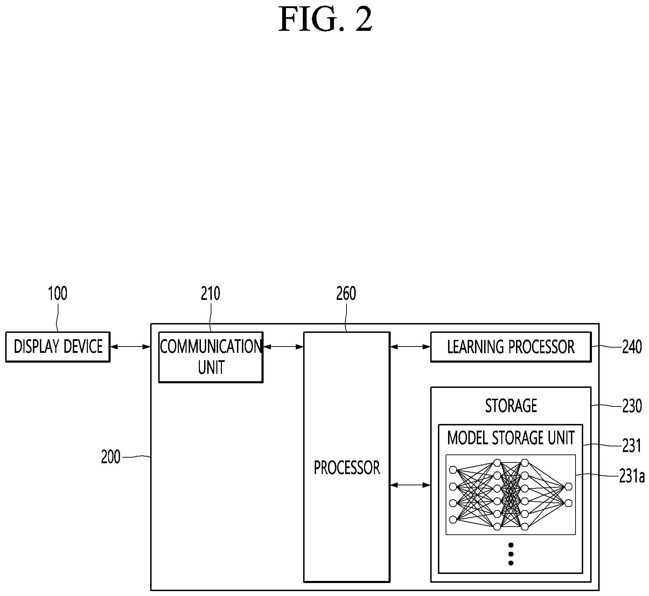

FIG. 2 illustrates an artificial intelligence (AI) server according to an embodiment of the present disclosure.

Referring to FIG. 2, the AI server 200 may refer to a device that trains an artificial neural network using a machine learning algorithm or uses a learned artificial neural network.

The AI server 200 may be composed of a plurality of servers to perform distributed processing and may be defined as a 5G network.

The AI server 200 may be included as a part of the AI device 100 and may perform at least part of the AI processing.

The AI server 200 may include a communication unit 210, a storage 230, a learning processor 240, and a processor 260.

The communication unit 210 can transmit and receive data with an external device such as the display device 100.

The storage 230 may include a model storage unit 231.

The model storage unit 231 may store a model (or artificial neural network, 231a) that is being trained or has been learned through the learning processor 240.

The learning processor 240 can train the artificial neural network 231a using training data. The learning model may be used while mounted on the AI server 200 of the artificial neural network or may be mounted and used on an external device such as the display device 100.

Learning models can be implemented in hardware, software, or a combination of hardware and software. When a part or all of the learning model is implemented as software, one or more instructions constituting the learning model may be stored in the storage 230.

The processor 260 may infer a result value for new input data using a learning model and generate a response or control command based on the inferred result value.

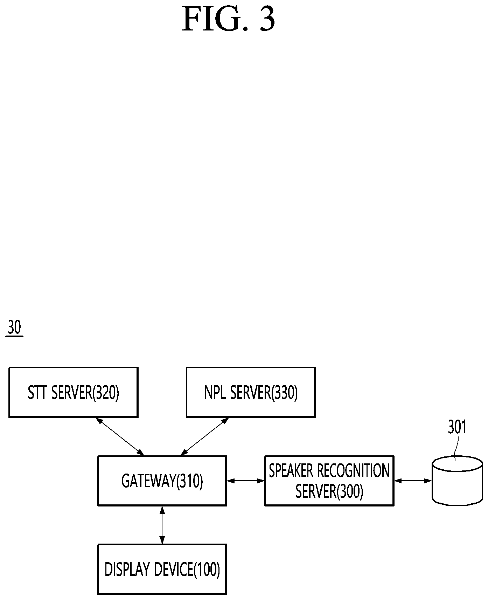

FIG. 3 is a diagram for explaining the configuration of a voice recognition system according to an embodiment of the present disclosure.

Referring to FIG. 3, the voice recognition system 30 may include a display device 100, a gateway 310, a Speech-To-Text (STT) server 320, a Natural Language Processing (NLP) server 330, and a speaker recognition server 300.

Each component constituting the voice recognition system 30 can perform wireless communication with each other. Wireless communication may be Internet communication.

The speaker recognition server 300 may be referred to as a speaker recognition device.

The gateway 310 can relay between each server and the display device 100.

The STT server 320 may convert voice data received from the display device 100 or the NLP server 330 into text data using an STT engine.

The speaker recognition server 300 may obtain the speaker's account information based on voice data received from the NLP server 330 or the display device 100.

The speaker database 301 may store the speaker's account information.

The NLP server 330 may obtain analysis results based on voice data received from the display device 100. The NLP server 330 may generate a response result based on the analysis result and account information.

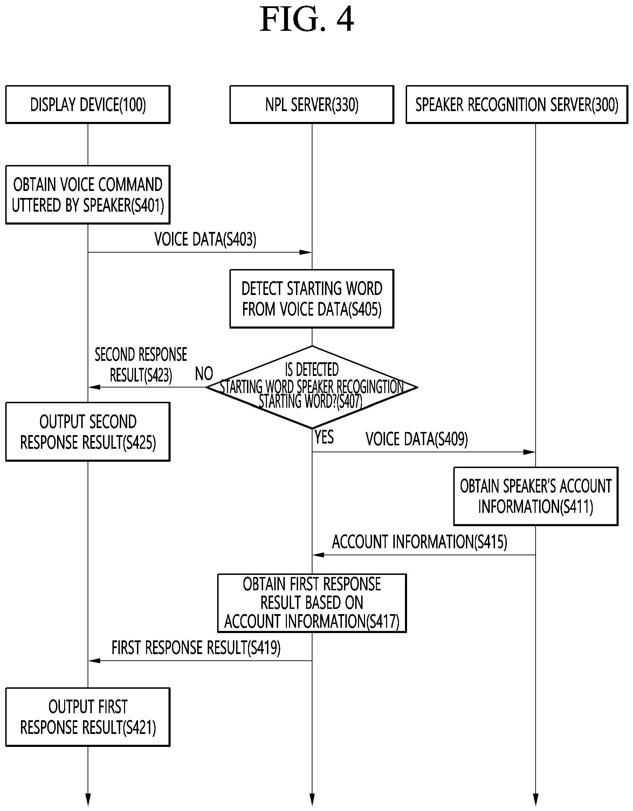

FIG. 4 is a ladder diagram for explaining the operation method of the speaker recognition system according to an embodiment of the present disclosure.

Hereinafter, each of the NLP server 330 and the speaker recognition server 300 may be an example of the AI server 200 of FIG. 2.

Each of the NLP server 330 and the speaker recognition server 300 may include all components of the AI server 200 of FIG. 2.

Referring to FIG. 4, the controller 170 of the display device 100 obtains a voice command uttered by the speaker (S401).

In one embodiment, the controller 170 may receive a voice command from a remote control device that can remotely control the operation of the display device 100.

In another embodiment, the controller 170 may obtain a voice command through a microphone (not shown) provided in the display device 100.

The controller 170 of the display device 100 may transmit voice data corresponding to the voice command to the NLP server 330 through the network interface 133 (S403).

The controller 170 may preprocess voice commands and transmit the preprocessed voice data to the NLP server 330.

The processor 260 of the NLP server 330 may detect the starting word from the voice data (S405).

In one embodiment, the processor 260 of the NLP server 330 can convert voice data into text data using an STT engine and detect a starting word from the converted text data.

The NLP server 330 may receive text data from a Speech To Text (STT) server. In this case, the display device 100 may transmit voice data to the STT server, and the STT server may transmit text data for the voice data to the NLP server 330.

The starting word may be a command to activate the voice recognition service.

The processor 260 of the NLP server 330 may detect the starting word by determining whether the text data includes a starting word text corresponding to a pre-stored starting word.

The processor 260 of the NLP server 330 may determine whether the detected starting word is a speaker recognition starting word (S407).

In one embodiment, the starting word may be either a speaker recognition starting word or a speaker recognition non-starting word. That is, the starting words can be divided into two types.

The speaker recognition starting word may be a first type of starting word, and the speaker recognition non-starting word may be a second type of starting word.

A speaker recognition starting word may be a starting word indicating that a response result to a voice command uttered by the speaker is provided based on the speaker's account information. For example, the speaker recognition starting word may be <HI AA>, but this is only an example.

A speaker recognition non-starting word may be a starting word indicating that a response result to a voice command uttered by the speaker is provided, not based on the speaker's account information. For example, the speaker recognition non-starting word may be <HI BB>, but this is only an example.

According to an embodiment of the present disclosure, a response result may be provided that reflects the speaker's account information or does not reflect the speaker's account information depending on the type of the starting word.

If the detected starting word is determined to be a speaker recognition starting word, the processor 260 of the NLP server 330 may transmit voice data to the speaker recognition server 300 (S409).

The processor 260 of the NLP server 330 may transmit voice data to the speaker recognition server 300 through the communication unit 210.

The speaker recognition server 300 may obtain the speaker's account information based on the received voice data (S411) and transmit the obtained account information to the NLP server 330 (S417).

The speaker recognition server 300 can obtain a voice feature set representing features of voice data and convert the obtained voice feature set into an embedding vector.

Voice characteristics may include one or more of frequency characteristics, sound level, and pitch.

The processor 260 of the speaker recognition server 300 can extract speech features from the voice signal using the Mel-Frequency Cepstral Coefficients (MFCC) technique.

The MFCC technique may be a technique that divides a voice signal into a plurality of frequency bands and calculates the energy in each frequency band.

The processor 260 of the speaker recognition server 300 may obtain an embedding vector representing a voice feature set from voice data through the MFCC technique.

The speaker recognition server 300 may compare the converted embedding vectors with the embedding vectors stored in the speaker database 301 and extract an embedding vector whose similarity is greater than or equal to a preset similarity.

The speaker database 301 may store an embedding vector identifying the speaker and speaker account information corresponding to the embedding vector.

The speaker account information may include information about the speaker, such as speaker identification information that identifies the speaker, the speaker's preferred genre, or content that the speaker recently viewed.

Speaker identification information may include one or more of an embedding vector representing the speaker's voice characteristics, a speaker's ID, or a speaker's name.

The processor 260 of the NLP server 330 may obtain a first response result for voice data based on the received account information (S417).

The processor 260 of the NLP server 330 may obtain the first response result based on the intent analysis result of the account information and voice data.

The first response result may include a personalized search result based on the speaker's account information when the intent of the voice data is to request a search.

Personalized search results may include content related to the speaker's preferred genre and recently viewed content.

The processor 260 of the NLP server 330 may request search results reflecting the speaker's account information from the search server or content provider server and may receive personalized search results from the search server or content provider server.

The processor 260 of the NLP server 330 may transmit the received first response result to the display device 100 (S419).

The processor 260 of the NLP server 330 may transmit the first response result to the display device 100 through the communication unit 210.

The controller 170 of the display device 100 may output the received first response result (S421).

The controller 170 may display the received first response result on the display 180.

Meanwhile, the processor 260 of the NLP server 330 may obtain a second response result when the detected starting word is not a speaker recognition starting word, and transmit the obtained second response result to the display device 100. (S423).

The processor 260 of the NLP server 330 may analyze the intent of the text data corresponding to the voice data when the detected starting word is a speaker recognition non-starting word.

In one embodiment, the second response result may include a general search result that does not reflect the speaker's account information when the intention of the voice data is to request a search.

The controller 170 of the display device 100 may output the received second response result (S425).

The controller 170 may display the received second response result on the display 180.

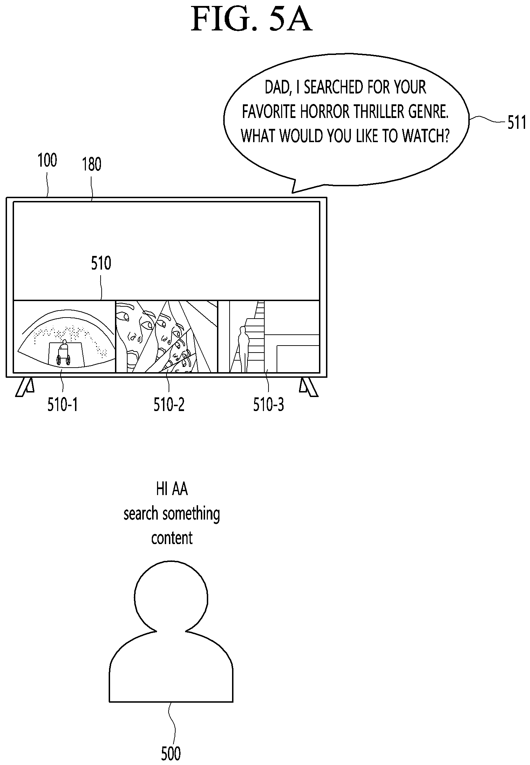

FIGS. 5a to 5c are views for explaining examples of providing different search results according to the utterance of a speaker recognition starting word or a speaker recognition non-starting word according to an embodiment of the present disclosure.

Hereinafter, it is assumed that the speaker recognition starting word is <HI AA>, and the speaker recognition non-starting word is <HI BB>.

First, referring to FIG. 5a, the speaker 500 utters a voice command <HI AA search something content> including a speaker recognition starting word.

The display device 100 may obtain voice data corresponding to the uttered voice command and transmit the obtained voice data to the NLP server 330.

The NLP server 330 can convert voice data into text data and extract <HI AA>, a speaker recognition starting word, from the converted text data.

When the speaker recognition starting word is extracted, the NLP server 330 may transmit voice data to the speaker recognition server 300 and receive the speaker's account information from the speaker recognition server 300.

The NLP server 330 may obtain a first response result including a personalized search result using the intent analysis result of the text data and the speaker's account information.

The NLP server 330 may generate a first response result 510 including content of the thriller genre using the intention of requesting content search and the preferred genre of the speaker 500 included in the account information.

The NLP server 330 may transmit the generated first response result 510 to the display device 100, and the display device 100 may display the first response result 510 on the display 180. The display device 100 may output a voice 511 through the audio output interface 185 to inform the speaker that the first response result 510 has been provided.

The first response result 510 may include a plurality of content items 510-1, 510-2, and 510-3 reflecting account information.

Meanwhile, in another embodiment, the display device 100 may independently detect the starting word based on voice data. In other words, the display device 100 can be the entity that detects the speaker recognition starting word.

The display device 100 can convert voice data into text data using an STT engine and detect a starting word from the converted text data.

If the detected starting word is a speaker recognition starting word, the display device 100 may transmit voice data and text data to the NLP server 330. The NLP server 330 may obtain intent analysis results based on text data. The NLP server 330 may transmit voice data to the speaker recognition server 300 and receive the speaker's account information from the speaker recognition server 300.

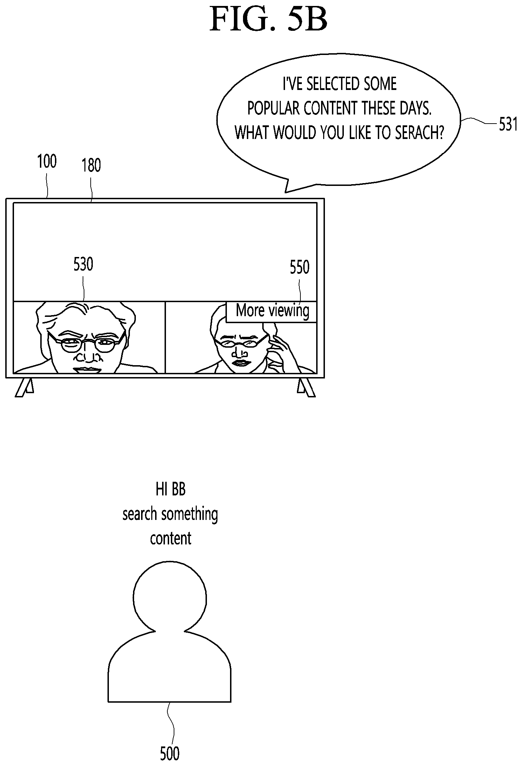

Referring to FIG. 5b, the speaker 500 utters a voice command <HI BB search something content> including a speaker recognition non-starting word.

The display device 100 may obtain voice data corresponding to the uttered voice command and transmit the obtained voice data to the NLP server 330.

The NLP server 330 can convert voice data into text data and extract <HI BB>, a speaker recognition non-starting word, from the converted text data.

The NLP server 330 may obtain an intention analysis result of text data, when a speaker recognition non-starting word is extracted.

The NLP server 330 may generate a second response result 530 using the intention of requesting content search. The second response result 530 may be a general search result that does not reflect the account information of the speaker 500.

The NLP server 330 may transmit the generated second response result 530 to the display device 100, and the display device 100 may display the second response result 530 on the display 180.. The display device 100 may output a voice 531 through the audio output interface 185 to inform the speaker that the second response result 530 has been provided.

As such, according to an embodiment of the present disclosure, personalized search results linked to the speaker's account information may be provided according to the utterance of the speaker recognition starting word. Accordingly, the user experience can be greatly improved.

Meanwhile, a more viewing item 550 may be displayed on the second response result 530.

The more viewing item 550 may be an item for additionally providing personalized search results based on the speaker's account information.

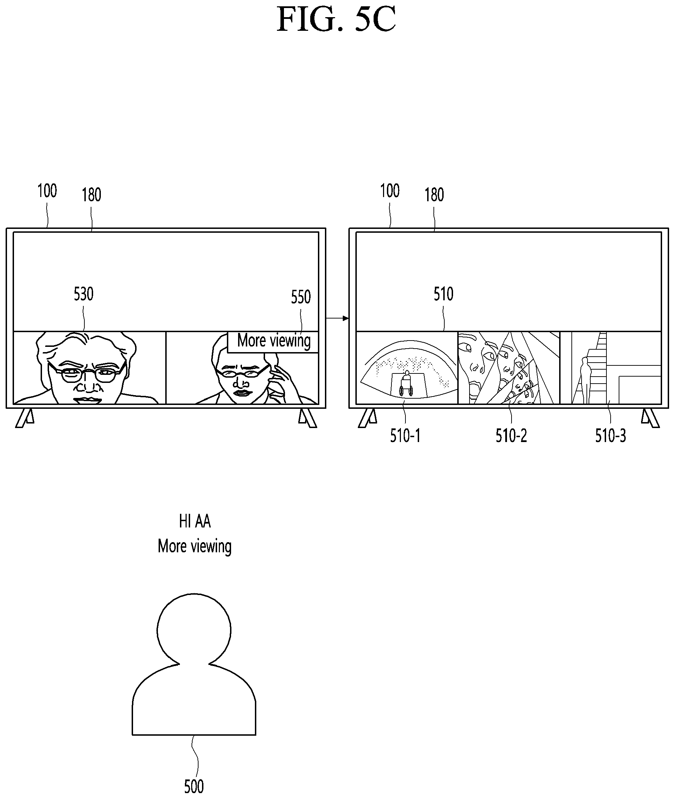

FIG. 5c may be a scenario that may occur when the speaker 500 utters the voice command <HI AA More viewing> in the situation of FIG. 5b.

The display device 100 may obtain voice data corresponding to <HI AA More viewing> and transmit the obtained voice data to the NLP server 330.

The NLP server 330 can convert voice data into text data and extract a speaker recognition starting word <HI AA> from the converted text data.

When the speaker recognition starting word is extracted, the NLP server 330 may transmit voice data to the speaker recognition server 300 and receive account information of the speaker 500 from the speaker recognition server 500.

The NLP server 330 may use the intention analysis result of the voice data corresponding to <HI AA More viewing> and the account information of the speaker 500 to obtain a first response result 510 including content about the preferred genre of the speaker 500. The NLP server 330 may transmit the first response result 510 to the display device 100, and the display device 100 may display the first response result 510 on the display 180.

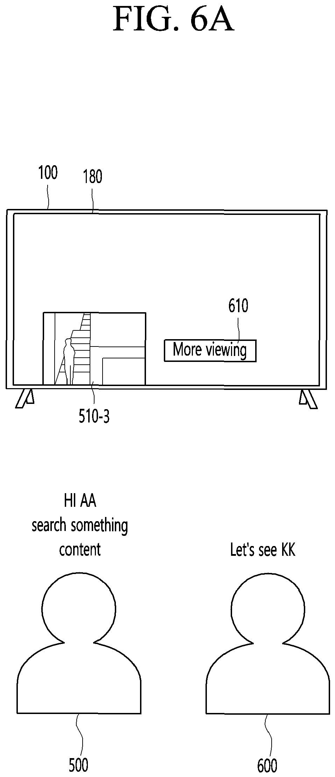

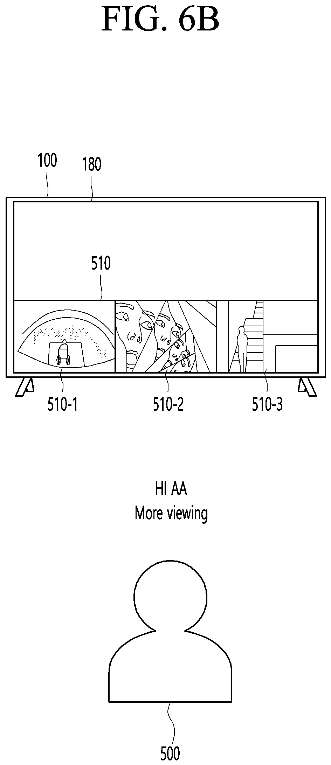

FIGS. 6a and 6b are views for explaining examples of providing filtered search results when the first speaker utters a first voice command including a speaker recognition starting word and the second speaker utters a second voice command according to an embodiment of the present disclosure.

Referring to FIG. 6A, the first speaker 500 utters a first voice command <HI AA search something content>, and the second speaker 600 utters a second voice command <Let's see KK>.

The display device 100 may transmit first voice data corresponding to the first voice command and second voice data corresponding to the second voice command to the NLP server 330.

The NLP server 330 may convert first voice data into first text data and convert second voice data into second text data.

The NLP server 330 may extract <HI AA>, which is a speaker recognition starting word, from the first text data.

The NLP server 330 may transmit the first voice data to the speaker recognition server 300 and receive the first account information of the first speaker from the speaker recognition server 300.

The NLP server 330 may transmit the second voice data to the speaker recognition server 300 and receive age information corresponding to the second voice data from the speaker recognition server 300. The speaker recognition server 300 may analyze voice features of the second voice data and extract age information of the second speaker who uttered the second voice data.

The NLP server 330 may obtain an integrated response result based on the first account information, the first intention analysis result of the first voice data, and the age information of the second speaker. If the first intention analysis result is a content search request, the integrated response result may include some content of the content related to the preferred genre included in the first account information that can be viewed by people under a certain age.

The NLP server 330 may filter content by considering the age information of the second speaker among all content linked to the first account information. For example, the NLP server 330 may exclude the corresponding content from content included in the integrated response result if viewing is restricted to those under a certain age.

The NLP server 330 may transmit the integrated response result to the display device 100, and the display device 100 may display the integrated response result on the display 180.

In FIG. 6a, when explained in connection with the embodiment of FIG. 5a, the display device 100 considers age information of the second speaker 600 among the first to third content items 510-1 to 510-3, and thus only the third content item 510-3 can be displayed on the display 180. That is, the third content item 510-3 may be an integrated response result, and the first and second content items 510-1 and 510-2 may be filtered items.

The display device 100 may further display a more viewing item 610 on the display 180.

As shown in FIG. 6b, the display device 100 may receive a voice command from the first speaker 500, <HI AA More Viewing>. <HI AA More Viewing> may be a voice command intended to select the more viewing item 610.

The display device 100 may additionally display the filtered first and second content items 510-1 and 510-2 on the display 180 according to the received voice command.

As such, according to an embodiment of the present disclosure, when the first speaker 500 and the second speaker 600 utter, the account information of the first speaker 500 and the age information of the second speaker 600 are considered, and thus filtered search results may be provided. Accordingly, when the viewing age of the second speaker 600 is low, only content appropriate for the age of the second speaker 600 can be provided.

According to another embodiment of the present disclosure, whether to recognize the speaker may be determined according to situation recognition conditions through a microphone or camera provided in the display device 100.

That is, when a specific speaker is identified through a microphone or camera, a response result may be generated by reflecting the identified speaker's account information.

According to an embodiment of the present disclosure, the above-described method can be implemented as a processor-readable code in a medium on which a program is recorded. Examples of media readable by the processor include ROM, RAM, CD-ROM, magnetic tape, floppy disk, optical data storage, and the like.

The display device described above is not limited to the configuration and method of the above-described embodiments, but the above embodiments may be configured by selectively combining all or part of each embodiment so that various modifications can be made.

## Claims

1. A display device comprising:
a display;
a network interface configured to communicate with a Natural Language Processing (NLP) server; and
a controller configured to obtain first voice data uttered by a first speaker, receive a first response result linking with account information of the first speaker from the NLP server based on the fact that the first voice data includes a first type of starting word, and display the first response result on the display.

2. The display device of claim 1,
wherein the controller is configured to receive a second response result that is not linked to the account information of the speaker based on the fact that the first voice data includes a second type of starting word, and display the second response result on the display.

3. The display device of claim 1,
wherein the first response result includes an intent analysis result of the first voice data and a search result based on the account information, and
wherein the second response result includes a search result based on the intent analysis result of the first voice data.

4. The display device of claim 1,
wherein the account information includes one or more of the speaker's preferred genres or information about content that the speaker recently viewed.

5. The display device of claim 2,
wherein the controller is configured to:
further display more viewing items on the display, and
display the first response result reflecting the account information on the display in response to receiving a voice command including the first type of starting word for selecting the more viewing items uttered by the first speaker.

6. The display device of claim 1,
wherein the controller configured to:
display some content items considering age information of the second speaker among a plurality of content items included in the first response result on the display based on receiving second voice data uttered by a second speaker.

7. The display device of claim 6,
wherein the controller is configured to:
receive some of the content items from which the remaining content items are filtered considering the age information of the second speaker among the plurality of content items from the NLP server.

8. An operating method of a display device comprising:
obtaining first voice data uttered by a first speaker;
receiving a first response result linked to account information of the first speaker from an NLP server based on the fact that the first voice data includes a first type of starting word; and
displaying the first response result.

9. The operating method of a display device of claim 8, further comprising:
receiving a second response result that is not linked to the account information of the speaker based on the fact that the first voice data includes a second type of starting word; and
displaying the second response result on the display.

10. The operating method of a display device of claim 8,
wherein the first response result includes an intent analysis result of the first voice data and a search result based on the account information, and
wherein the second response result includes a search result based on the intent analysis result of the first voice data.

11. The operating method of a display device of claim 8,
wherein the account information includes one or more of the speaker's preferred genres or information about content that the speaker recently viewed.

12. The operating method of a display device of claim 9, further comprising:
displaying more viewing items; and
displaying the first response result reflecting the account information in response to receiving a voice command including the first type of starting word for selecting the more item uttered by the first speaker.

13. The operating method of a display device of claim 8, further comprising:
displaying some content items considering age information of the second speaker among a plurality of content items included in the first response result based on receiving second voice data uttered by a second speaker.

14. The operating method of a display device of claim 13, further comprising:
receiving some of the content items from which the remaining content items are filtered considering the age information of the second speaker among the plurality of content items from the NLP server.

## Amended claims

### Amended claims in accordance with Rule 137(2) EPC.

1. A display device (100) comprising:
a display (180);
a network interface (133) configured to communicate with a Natural Language Processing, NLP, server; and
a controller (170) configured to obtain first voice data uttered by a first speaker, receive a first response result linking with account information of the first speaker from the NLP server based on the fact that the first voice data includes a first type of starting word, and display the first response result on the display (180), and
wherein the controller (170) is further configured to analyze voice features of a second speaker and extract age information of the second speaker, and display some content items considering age information of the second speaker among a plurality of content items included in the first response result on the display (180) based on receiving second voice data uttered by the second speaker.

2. The display device of claim 1,
wherein the controller (170) is configured to receive a second response result that is not linked to the account information of the speaker based on the fact that the first voice data includes a second type of starting word, and display the second response result on the display (180).

3. The display device (100) of claim 1,
wherein the first response result includes an intent analysis result of the first voice data and a search result based on the account information, and
wherein the second response result includes a search result based on the intent analysis result of the first voice data.

4. The display device (100) of claim 1,
wherein the account information includes one or more of the speaker's preferred genres or information about content that the speaker recently viewed.

5. The display device (100) of claim 2,
wherein the controller (170) is configured to:
further display more viewing items on the display (180), and
display the first response result reflecting the account information on the display (180) in response to receiving a voice command including the first type of starting word for selecting the more viewing items uttered by the first speaker.

6. The display device (100) of claim 1,
wherein the controller (170) is configured to:
receive some of the content items from which the remaining content items are filtered considering the age information of the second speaker among the plurality of content items from the NLP server.

7. An operating method of a display device (100) comprising a display (180), the method comprising:
obtaining first voice data uttered by a first speaker;
receiving a first response result linked to account information of the first speaker from an NLP server based on the fact that the first voice data includes a first type of starting word; and
displaying the first response result, and
wherein the method further comprises analyzing voice features of a second speaker and extracting age information of the second speaker, and displaying some content items considering age information of the second speaker among a plurality of content items included in the first response result based on receiving second voice data uttered by the second speaker.

8. The operating method of a display device of claim 7, further comprising:
receiving a second response result that is not linked to the account information of the speaker based on the fact that the first voice data includes a second type of starting word; and
displaying the second response result on the display (180).

9. The operating method of a display device (100) of claim 7,
wherein the first response result includes an intent analysis result of the first voice data and a search result based on the account information, and
wherein the second response result includes a search result based on the intent analysis result of the first voice data.

10. The operating method of a display device (100) of claim 7,
wherein the account information includes one or more of the speaker's preferred genres or information about content that the speaker recently viewed.

11. The operating method of a display device (100) of claim 7, further comprising:
displaying more viewing items; and
displaying the first response result reflecting the account information in response to receiving a voice command including the first type of starting word for selecting the more item uttered by the first speaker.

12. The operating method of a display device (100) of claim 7, further comprising:
receiving some of the content items from which the remaining content items are filtered considering the age information of the second speaker among the plurality of content items from the NLP server.
